# EUROPEAN PATENT APPLICATION

(11) **EP 4 699 679 A1**
(43) Date of publication of application: **25.02.2026**
(21) Application number: 24792380.8
(22) Date of filing: 07.03.2024
(51) Int. Cl.: B01D 35/14, B01D 33/06, C04B 28/14

(54) **VACUUM ROTARY FILTRATION METHOD AND VACUUM ROTARY FILTRATION METHOD FOR GYPSUM SLURRY**

(30) Priority: 20.04.2023 JP 2023069211
(71) Applicant: TOKUYAMA CORPORATION, Yamaguchi 745-8648 (JP)
(72) Inventor: HIRANAKA Shingo, Shunan-shi, Yamaguchi 745-8648 (JP); SAITOU Akira, Shunan-shi, Yamaguchi 745-8648 (JP)
(74) Representative: Kuhnen & Wacker Patent- und Rechtsanwaltsbüro PartG mbB
(86) International application number: PCT/JP2024/008776
(87) International publication number: WO 2024/219104

(57) **Abstract**

Slurry which easily generates air bubbles are vacuum filtered. The slurry is filtered into solid portion and filtrate by a vacuum rotary filtration machine, and the filtrate is supplied to a gas-liquid separator. Gas in the upper portion of the gas-liquid separator is exhausted by a vacuum pump, and the filtrate at the bottom of the gas-liquid separator is discharged by a feed pump. The feed pump is capable of running dry without the filtrate, and a check valve is provided at a discharge side of the feed pump such that the filtrate is discharged via the check valve, the check valve is closed by the negative pressure generated by the vacuum pump when the feed pump is dry running.

## Description

### Technical Field

The present invention relates to a method for vacuum rotary filtration of slurry into solid portion and filtrate, and a vacuum rotary filtration method for gypsum slurry using the same.

### Background Art

The applicant has succeeded in commercial reclaiming of gypsum from waste gypsum boards. For example, according to Patent Document 1 (JP 2023-36207A), waste gypsum boards are crushed, foreign matters such as gravel and metal pieces are removed, and paper pieces derived from the gypsum boards are separated. Then, the resultant gypsum powder is baked and converted into hemihydrate and/or anhydrite type III gypsum. The baked gypsum is mixed in a mixing tank to form a gypsum slurry, gypsum particles are generated from the slurry in a crystallization tank, and the gypsum particles and liquid are separated by a solid-liquid separator such as a belt filter. The recovered filtrate is, for example, recirculated to the mixing tank.

### Prior Document List

### Patent Documents

Patent Document 1: JP 2023-36207A
Patent Document 2: JPS 62-19220A

### Summary of the Invention

### Objects of the Invention

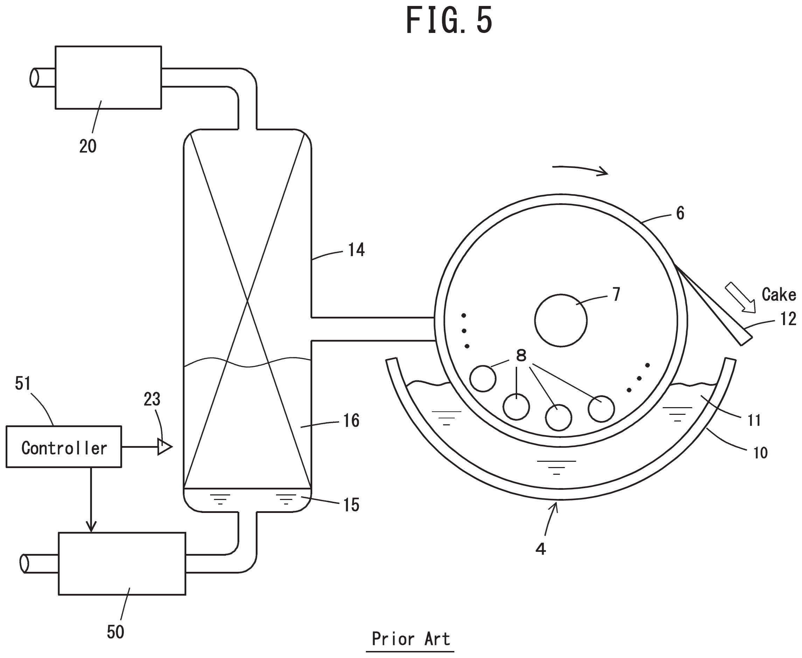

The inventors have considered to apply vacuum rotary filtration for solid-liquid separation of gypsum slurry. Fig. 5 shows a conventional solid-liquid separation method using a vacuum filter 4. A filter cloth (not shown) is fixed to a drum 6 with holes, which rotates around an axis 7, and gypsum slurry 11 is supplied to a container 10. The filtrate passing through the filter cloth and entering the drum 6 is discharged from a discharge port 8, and the solid material accumulated on the surface of the filter cloth is scraped off by a scraper 12. Gas is separated from the filtrate derived from the gypsum slurry by a gas-liquid separator 14, and the gas is discharged by a water-sealed vacuum pump 20. The filtrate is discharged by a feed pump 50. Denoted by 15 is the filtrate inside the separator 14. Denoted by 16 are air bubbles. Due to the surfactants used in gypsum board production, the filtrate foams within the separator 14 decompressed by the vacuum pump 20. Sometimes, the air bubbles 16 overflow into the vacuum pump 20.

A water-sealed vacuum pump 20 becomes unstable when it sucks in air bubbles and the sealing water is contaminated, and in extreme cases, the pump 20 is damaged. Usual liquid supply pumps 50 discharge liquid by centrifugal force generated by the rotation of an impeller (not shown), and therefore, they have a low bubble discharge capacity. Additionally, usual liquid supply pumps 50 cool the bearing with the processed liquid, and running them dry without liquid may cause damage. The liquid level sensor 23 monitors the liquid level, and the controller 51 adjusts the flow rate of pump 50 to maintain a constant liquid level. This prevents the pump 50 from running dry and prevents air from flowing back into the separator 14.

Neither the vacuum pump 20 nor the liquid supply pump 50 is suitable for discharging air bubbles 16. Therefore, if the generation rate of air bubbles exceeds their elimination rate, the separator 14 becomes filled with air bubbles 16, the air bubbles contaminating the vacuum pump's seal water and rendering vacuum filtration impossible. Since surfactants are used in the production of gypsum boards, the use of defoamers renders the reclaimed gypsum unsuitable as raw material for gypsum boards. The obstruction of vacuum rotary filtration by air bubbles in the separator is not limited to the gypsum slurry derived from waste gypsum boards but is a general issue arising in slurries containing surfactants.

The objects of the invention are to enable stable vacuum rotary filtration of slurry prone to air bubbling and to enable stable vacuum rotary filtration of gypsum slurry derived from waste gypsum boards.

### Means for Solving the Problems

The vacuum rotary filtration method according to the invention comprises: filtering slurry into solid portion and filtrate by a vacuum rotary filtration machine; supplying the filtrate to a gas-liquid separator; exhausting gas in upper portion of the gas-liquid separator by a vacuum pump; and discharging the filtrate at a bottom of the gas-liquid separator by a feed pump.

According to the invention, the feed pump is one that is capable of running dry without filtrate, and a check valve is provided at a discharge side of the feed pump such that the feed pump discharges the filtrate via the check valve and that the check valve is closed by negative pressure generated by the vacuum pump when the filtrate within the gas-liquid separator decreases and the feed pump is running dry.

According to the invention, a feed pump capable of dry running is used to continue the operation and discharge air bubbles when the filtrate in the gas-liquid separator is reduced. Therefore, the sealing water in the vacuum pump is not contaminated by the air bubbles. Further, when all the filtrate is discharged, the check valve is closed, and air does not flow back into the gas-liquid separator through the feed pump. As a whole, slurry which easily makes air bubbles is continuously and stably vacuum filtered.

Preferably, the feed pump is continuously operated regardless of a level of the filtrate within the gas-liquid separator. Since the backflow of air into the gas-liquid separator is blocked by the check valve, and since the feed pump is capable of running dry, the feedback control according to the height of filtrate is not needed.

Preferably, when excess air bubbles are generated during the vacuum rotary filtration and the air bubble surface rises, the vacuum pump is stopped or the similar process is performed under the control of a controller, and the vacuum pressure in the gas-liquid separator is reduced. Then, the air bubbles do not enter into the vacuum pump, and the air bubbles are contracted and easily discharged by the feed pump. The contracted air bubbles and the filtrate are promptly discharged by the feed pump.

The vacuum rotary filtration method for gypsum slurry according to the invention filters gypsum slurry derived from waste gypsum boards. Since continuous vacuum filtering is performed without interruption by air bubbles, gypsum slurry that generates easily air bubbles can be continuously filtered.

### Brief Description of the Drawings

- Fig. 1:: A diagram indicating the vacuum rotary filtration method according to an embodiment
- Fig. 2:: A schematic cross-sectional view indicating a feed pump
- Fig. 3:: A schematic cross-sectional view indicating a check valve
- Fig. 4:: A process diagram indicating the reclaiming of gypsum according to the embodiment
- Fig. 5:: A diagram indicating a conventional vacuum rotary filtration method

### Features for Carrying out the Invention

An embodiment for carrying out the invention will be described. The scope of the invention shall be determined based on the claims, taking into account the descriptions in the specification and well known prior art in the field, in accordance with the understanding of those skilled in the art. The scope of the invention shall not be limited to the embodiment.

### Embodiment

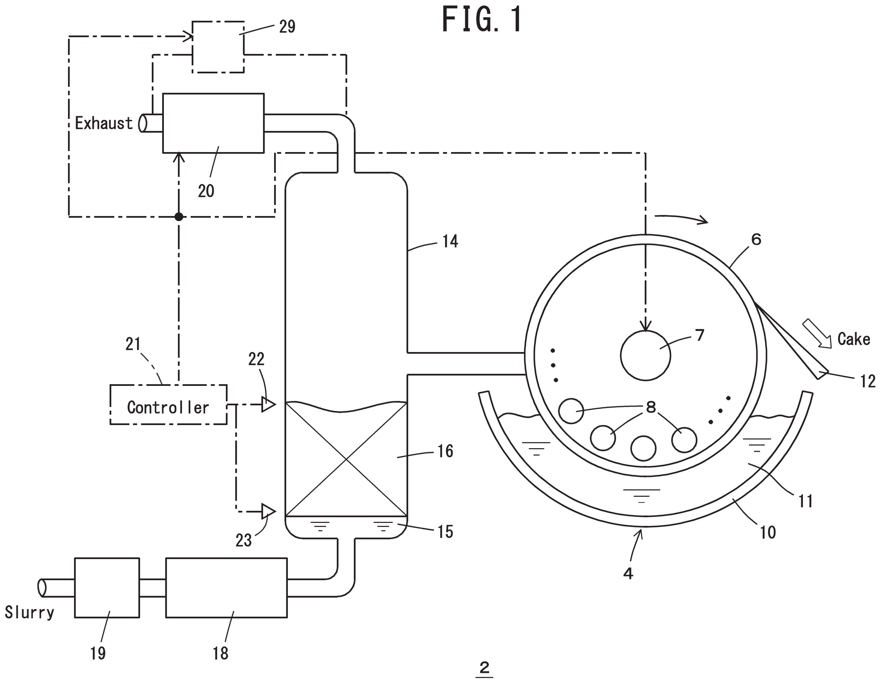

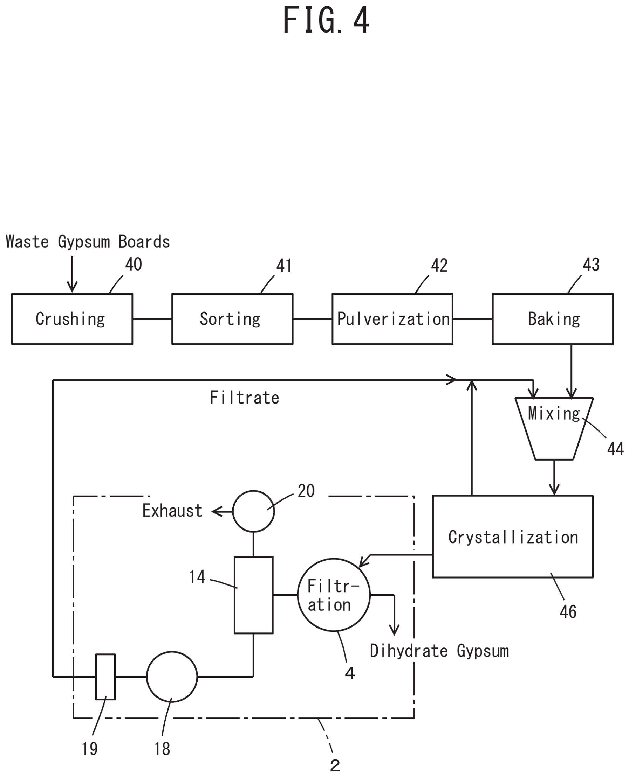

Figs. 1 to 3 indicate a vacuum rotary filtration method according to an embodiment. Fig. 4 indicates a method for reclaiming gypsum from waste gypsum boards according to the embodiment. Fig. 1 indicates an embodiment of a vacuum rotary filtration system 2; a vacuum rotary filtration machine 4 is equipped with a drum 6 having holes covered by a filter cloth (not shown). The drum is immersed in slurry 11 within a container 10 and is rotated, and a solid portion (cake) accumulated on the filter cloth is scraped off by a scraper 12. The filtrate generated inside the drum 6 is sent to a gas-liquid separator 14, and the filtrate 15 at the bottom of the separator is discharged by a feed pump 18, with a check valve 19 installed at the outlet side of pump 18. The gas at the upper portion of separator 14 is exhausted by a vacuum pump 20, such as a water-sealed type, and the pressure inside the separator 14 is reduced by about 60 kPa relative to an atmospheric pressure. In the separator 14, air bubbles 16 are formed over the filtrate 15, and as the liquid level of the filtrate 15 decreases, the feed pump 18 discharges both the filtrate 15 and the air bubbles 16.

The feed pump 18 is one that is capable of running dry, i.e., it can continue operation without filtrate 15. When the filtrate 15 becomes running out, the feed pump 18 discharges a mixture of the filtrate 15 and the air bubbles 16. Therefore, the separator 14 does not become filled with air bubbles 16. By the way, since conventional feed pumps may be damaged if they suck in air bubbles, they are stopped when the liquid level drops and can not discharge air bubbles 16.

According to the embodiment, the feed pump 18 is continuously operated in an open loop without monitoring the liquid level of the filtrate 15 in the separator 14. However, as shown by the chain line in Fig. 1, a bubble sensor 22 may be provided to detect the bubble surface (the upper surface of the air bubbles 16) by light reflection or the like. A liquid level sensor 23 may optionally be provided in addition to the bubble sensor 22.

In the case that a controller 21 and the bubble sensor 22 are provided, when the bubble surface rises above the monitoring level of the bubble sensor 22, for example, the vacuum pump 20 is temporarily stopped to reduce the vacuum level in the gas-liquid separator 14 for the time being. Instead of stopping the vacuum pump 20, a vacuum level adjustment valve 29 may be provided to bypass the vacuum pump 20, and the valve 29 may be opened to lower the vacuum level in the gas-liquid separator 14. When the vacuum level is reduced, the air bubbles 16 shrink and become easier to be discharged by the feed pump 18. At this time, the rotation of the drum 6 is preferably stopped or reduced by a signal of the controller 21 to prevent an increase in the water content of the cake.

When the bubble surface drops below the monitoring level of the bubble sensor 22, the vacuum pump 20 is restarted, or the vacuum level adjustment valve 29 is closed, to increase the vacuum level inside the gas-liquid separator 14. When the rotation of drum 6 is slowed down or stopped, the rotation of the drum 6 is returned to a normal state.

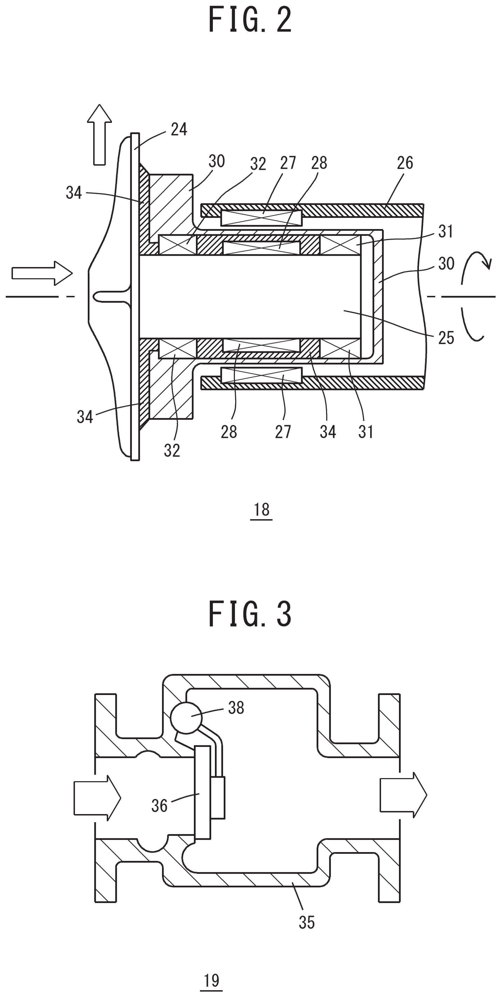

Fig. 2 indicates an example of the feed pump 18 capable of dry running. Such a feed pump 18 is provided by Sanwa Pump Co., Ltd. under the trade name "Gara Pump" (registered trademark), and other manufacturers also propose liquid pumps capable of dry running. The impeller 24 within the housing (not shown) discharges the liquid by centrifugal force. The shaft 25, to which the impeller 24 is attached, is coupled to a rotating cylinder 26 by ring-shaped magnets 27 and 28. The rotating cylinder 26 and the shaft 25 are rotated around the chain line in Fig. 2 by a motor (not shown). The shaft 25 is supported by an inner cylinder 30 via bearings 31 and 32. Filtrate 34 is introduced into a space between the inner cylinder 30 and the shaft 25, and the bearings 31 and 32 are cooled by the filtrate 34. Since the contact surfaces between the bearings 31 and 32 are coated with a wear-resistant material such as diamond-like carbon, the bearings 31, 32 do not wear, even when filtrate 34 runs out.

Fig. 3 indicates an example of the check valve 19. A valve 36 inside a casing 35 is rotatably mounted around a shaft 38, and the valve 36 closes when the filtrate from the feed pump 18 runs out. A check valve biased in the closing direction of the valve by a spring or the like may be used instead of the above valve.

The vacuum rotary filtration method according to the embodiment will be described. Slurry 11 derived from waste gypsum boards and so on, is rotary filtered under vacuum by the vacuum rotary filtration machine 4 to separate solid portion and filtrate. The filtrate is supplied to the separator 14, and the gas at the upper portion is exhausted by the vacuum pump 20. The feed pump 18 discharges the filtrate 15, for example, under open-loop control, and when the liquid level drops, the air bubbles 16 and the filtrate 15 are discharged. To ensure sufficient discharge of air bubbles and filtrate, the feed pump 18 has preferably a feed capacity of at least twice and up to six times the volume of the filtrate being fed. Additionally, the feed pump 18 has preferably a head pressure of at least 1.5 times and up to three times the sum of the negative pressure inside the separator 14 and the required discharge head pressure.

When the filtrate 15 in the separator 14 runs out, the pumps 18 and 20 continue operation, the feed pump 18 operates without liquid, and the check valve 19 is closed due to the negative pressure generated by the vacuum pump 20. As a result, the negative pressure in the separator 14 is maintained, and the vacuum rotary filtration machine 4 can continue filtration. When filtrate 15 flows into separator 14, it is discharged by the feed pump 18, and the check valve 19 opens. Since the capacity of feed pump 18 is set higher than the flow rate of filtrate 15, the amount of filtrate 15 in the separator 14 is small, and air bubbles 16 in the separator 14 are discharged along with the filtrate. Therefore, air bubbles 16 do not reach the vacuum pump 20. The feed pump 18 alternately operates under the two conditions of the above idle operation and normal operation. Since the negative pressure inside the separator 14 is maintained, and since the drum 6 is also kept under a reduced pressure, the vacuum filtration can be performed continuously.

Furthermore, when the bubble sensor 22 is provided, and by adjusting the vacuum level inside the gas-liquid separator 14 by the controller 21, air bubbles 16 are prevented from entering the vacuum pump 20. When the vacuum level inside the gas-liquid separator 14 is reduced, the air bubbles 16 shrink and are easily discharged by the feed pump 18. At this time, when the rotation of the drum 6 is controlled, the formation of a cake with high water content is prevented.

Fig. 4 illustrates the method for reclaiming dihydrate gypsum from waste gypsum boards according to the embodiment. The waste gypsum boards are crushed by a crusher 40, and then, wood pieces, concrete pieces, metal pieces, etc., are removed on a sorting conveyor 41. The remaining material is pulverized by a pulverizor 42, and gypsum board paper pieces, small metal pieces, gravel, etc. are separated. The resultant material is then baked in a baking apparatus 43 to convert it into hemihydrate and/or anhydrite Type III gypsum. The baked gypsum is mixed with slurry from the feed pump 18 in a mixing tank 44, and gypsum particles such as dihydrate gypsum, hemihydrate gypsum, or anhydrite gypsum are generated in a crystallization tank 46. The generated gypsum particles are separated from the slurry by the vacuum rotary filtration system 2, and the filtrate is returned to the mixing tank 44, for example.

### Experiment

As a vacuum rotary filtration machine 4, a blowback filter (filter area 7 m2) manufactured by Mitsubishi Kakoki Co., Ltd. was used. As a feed pump 18 capable of dry running, a "Gara Pump" (registered trademark) (Type IL) manufactured by Sanwa Pump Co., Ltd. was used, with a check valve 19 installed in the discharge pipe. Gypsum slurry derived from waste gypsum boards (slurry concentration of 35 mass%) was filtered by the vacuum rotary filtration machine 4. Under normal conditions, the negative pressure in the gas-liquid separator 14 was stable at 60 kPa. Depending on the properties of the waste gypsum boards, the bubble level rose sometimes over the monitoring level of the sensor 22; however, by stopping the vacuum pump by the controller 21, continuous operation was carried out without air bubbles 16 entering into the vacuum pump 20. Gypsum with a water content of 15 mass% was continuously produced at a rate of 5 t/h for 30 days without interruption.

According to the embodiment, vacuum rotary filtration of bubbling slurry such as gypsum slurry can be performed continuously without interruption by air bubbles.

### List of Symbols

- 2: Vacuum rotary filtration system
- 4: Vacuum rotary filtration machine
- 6: Drum
- 7: Shaft
- 8: Discharge port
- 10: Container
- 11: Slurry
- 12: Scraper
- 14: Gas-liquid separator
- 15: Filtrate
- 16: Bubbles
- 18: Feed pump
- 19: Check valve
- 20: Vacuum pump
- 21: Controller
- 22: Bubble sensor
- 23: Liquid level sensor
- 24: Impeller
- 25: Shaft
- 26: Rotating cylinder
- 27, 28: Magnet
- 29: Vacuum level adjustment valve
- 30: Inner cylinder
- 31,32: Bearing
- 34: Filtrate
- 35: Casing
- 36: Valve
- 38: Shaft
- 40: Crusher
- 41: Sorting conveyor
- 42: Pulverizor
- 43: Baking apparatus
- 44: Mixing tank
- 46: Crystallization tank
- 50: Liquid supply pump
- 51: Controller

## Claims

1. A vacuum rotary filtration method comprising:
filtering slurry into solid portion and filtrate by a vacuum rotary filtration machine;
supplying the filtrate to a gas-liquid separator; exhausting gas in upper portion of the gas-liquid separator by a vacuum pump; and discharging the filtrate at a bottom of the gas-liquid separator by a feed pump,
wherein the feed pump is one that is capable of running dry without filtrate, and
wherein a check valve is provided at a discharge side of the feed pump such that the feed pump discharges the filtrate via the check valve and that the check valve is closed by negative pressure generated by the vacuum pump when the filtrate within the gas-liquid separator decreases and the feed pump is running dry.

2. The vacuum rotary filtration method according to claim 1, wherein the feed pump is continuously operated regardless of a level of the filtrate within the gas-liquid separator.

3. The vacuum rotary filtration method according to claim 1 or 2, wherein a bubble sensor for monitoring a bubble level within the gas-liquid separator and a controller are provided,
further comprising reducing vacuum pressure within the gas-liquid separator, when the bubble level exceeds a predetermined height, by controlling the vacuum pump or a vacuum level adjustment valve bypassing the vacuum pump, by the controller.

4. The vacuum rotary filtration method according to claim 1 or 2, filtering gypsum slurry derived from waste gypsum boards.
